# EUROPÄISCHE PATENTSCHRIFT

(11) **EP 1 274 488 B1**
(45) Veröffentlichungstag und Bekanntmachung des Hinweises auf die Patenterteilung: **24.03.2010**
(21) Anmeldenummer: 01943258.2
(22) Anmeldetag: 18.04.2001
(51) Int. Cl.: A62C 13/64, F16K 31/363, A62C 35/64

(54) **BEHÄLTERVENTIL MIT AUSLÖSEVORRICHTUNG FÜR STATIONÄRE FEUERLÖSCHANLAGEN**
CONTAINER VALVE COMPRISING A RELEASE DEVICE FOR FIXED FIRE EXTINGUISHING SYSTEMS
SOUPAPE DE CONTENANT AVEC DISPOSITIF DE DECLENCHEMENT POUR INSTALLATIONS FIXES D'EXTINCTION D'INCENDIES

(30) Priorität: 20.04.2000 LU 90567
(43) Veröffentlichungstag der Anmeldung: 15.01.2003
(73) Patentinhaber: LUXEMBOURG PATENT COMPANY S.A., 1720 Luxembourg (LU)
(72) Erfinder: BERMES, Karl, 54666 Irrel (DE)
(74) Vertreter: Office Freylinger
(86) Internationale Anmeldenummer: PCT/EP2001/004389
(87) Internationale Veröffentlichungsnummer: WO 2001/080955

(56) Entgegenhaltungen:
- EP-A- 0 646 744
- DE-A- 2 611 653
- US-A- 4 231 393

## Beschreibung

Die vorliegende Erfindung betrifft ein Behälterventil mit Auslösevorrichtung für stationäre Feuerlöschanlagen.

### Stand der Technik

An ein Behälterventil mit Auslösevorrichtung für stationäre Feuerlöschanlagen werden hohe Anforderungen gestellt. Es muss: (1) den Gasdruck im Löschmittelbehälter bis zum Auslösen der Anlage sicher absperren (bei Hochdruckanlagen kann der Gasdruck im Behälter über 300 bar betragen); (2) durch einen möglichst einfachen Auslösemechanismus zuverlässig auslösbar sein; (3) dem ausströmenden Löschmittel einen geringen Fließwiderstand entgegenstellen (d.h. einen Ventilsitz mit großem Querschnitt aufweisen); und (4) nach dem Auslösen sicher geöffnet bleiben.

Die meisten Behälterventile mit Auslösevorrichtung für stationäre Feuerlöschanlagen sind heute als sogenannte Knickhebelventile ausgebildet. Diese Ventile haben jedoch den Nachteil, dass sie eine relativ hohe Auslösekraft erfordern um den Knickhebel zu betätigen. Es wurde daher bereits vorgeschlagen, Behälterventile mit Auslösevorrichtung für stationäre Feuerlöschanlagen als Differenzdruckventile zu bauen. Ein solches Differenzdruckventil umfasst einen Schließkolben der in einem Ventilkörper axial verschiebbar montiert ist und an einem ersten Ende eine Dichtfläche aufweist mit der er an einen Ventilsitz anpressbar ist. Das gegenüberliegende Ende des Schließkolbens ist abgedichtet in eine Auslösekammer eingeführt und bildet hierin eine Druckfläche aus die größer als der freie Querschnitt des Ventilsitzes ist. Ein Druckausgleichkanal durchquert den Schließkolben und verbindet die Auslösekammer mit einem Einlasskanal. Bei geschlossenem Ventil herrscht in der Auslösekammer somit der gleiche Druck wie in dem Einlassstutzen. Dies bedeutet, dass auf den Schließkolben eine Druckkraft in Richtung Ventilsitz ausgeübt wird, die das Ventil sicher geschlossen hält. Das Ventil umfasst weiterhin eine Auslösevorrichtung die beim Auslösen einen Druckabfall in der Auslösekammer erzeugt. Nach Abbau des Gegendrucks in der Auslösekammer wirkt auf den Schließkolben eine Druckkraft die ihn von seinem Ventilsitz weg gegen einen Endanschlag drückt. Hierdurch öffnet sich das Ventil, so dass das Druckmedium durch den Ventilsitz in den Auslassstutzen strömen kann. Der Endanschlag für den Schließkolben wird durch eine Dichtscheibe ausgebildet, gegen die die Mündung des Druckausgleichkanals gepresst wird. In dieser Stellung ist der Druckausgleichkanal folglich zur Auslösekammer hin abgedichtet, so dass sich in der Auslösekammer kein Gegendruck mehr aufbauen kann, selbst dann nicht falls kein Druckabbau mehr über die Auslösevorrichtung erfolgt. In anderen Worten, das Ventil bleibt nach dem Auslösen sicher geöffnet. Um das Ventil des entleerten Behälters zu schließen, wird die Auslösekammer über die Auslösevorrichtung belüftet, so dass eine Schließfeder den Schließkolben auf den Ventilsitz drücken kann.

In stationären Feuerlöschanlagen konnten sich solche Differenzdruckventile bis jetzt jedoch nicht als Alternative zu Knickhebeiventilen durchsetzen. Dies ist u.a. dadurch bedingt, dass das Befüllen des Druckbehälters mit solchen Differenzdruckventilen relativ problematisch ist. In der Tat kann das Befüllen nicht über den Anschlussstutzen des Ventils erfolgen, da der Schließkolben hierbei in seine abgedichtete Endstellung gedrückt würde und man keine Möglichkeit mehr hätte um das Ventil zu schließen. Man hat deshalb vorgeschlagen einen separaten Füllstutzen unterhalb des Ventilsitzes anzuordnen. Jedoch auch mit diesem separaten Füllstutzen muss das Füllen äußerst behutsam erfolgen, da bei einem schnellen Druckanstieg im Füllstutzen, der Schließkolben von seinem Ventilsitz abheben kann.

Dokument EP 0 646 744 beschreibt ein Flanschventil für Leitungseinbau welches eine Vorrichtung zur Druckregelung umfasst.

### Aufgabe der Erfindung

Der vorliegenden Erfindung liegt deshalb u.a. die Aufgabe zugrunde ein Behälterventil mit Auslösevorrichtung für stationäre Feuerlöschanlagen in Differenzdruckbauweise vorzuschlagen, das eine problemlose Befüllung des Behälters ermöglicht.

### Allgemeine Beschreibung der Erfindung

Diese Aufgabe wird erfindungsgemäß durch ein Ventil nach Anspruch 1 gelöst. Das erfindungsgemäße Ventil weist, wie die eingangs beschriebenen Differenzdruckventile, ebenfalls ein Abdichtelement auf, das den Druckausgleichkanal im Schließkolben abdichtet, wenn sich letzterer in seiner Endstellung befindet. Im Gegensatz zu den bekannten Ventilen ist dieses Abdichtelement jedoch nicht fest im Ventilkörper angebracht, sondern lässt sich von außen zwischen einer Dichtstellung und einer Füllstellung betätigen, wobei es in der Dichtstellung den Druckausgleichkanal des Schließkolbens in Endstellung abdichtet und in der Füllstellung den Druckausgleichkanal des Schließkolbens in Endstellung freigibt. Das Ventil lässt sich jetzt unmittelbar über den Auslassstutzen füllen. Entsprechend einer bevorzugten Vorgehensweise wird das Abdichtelement vor dem Füllvorgang in seine Füllstellung gebracht. Die dynamischen Kräfte die der einströmende Füllstrom auf den Schließkolben ausübt sind in der Tat meistens ausreichend um den Schließkolben gegen die Wirkung der Schließfeder in offener Stellung zu halten. Wird der Füllstrom jedoch abgebrochen, so verschwinden die dynamischen Druckkräfte die auf den Schließkolben wirken. Die Resultante der statischen Druckkräfte die auf den Schließkolben wirken ist ebenfalls gleich Null, da sich das Abdichtelement in Füllstellung befindet und der Behälterdruck sich folglich über den offenen Druckausgleichkanal in der Auslösekammer aufbauen kann. Der Schließkolben befindet sich somit in einem Druckgleichgewicht und wird nun durch die Federkraft der Schließfeder auf den Ventilsitz gedrückt. Zusammenfassend bleibt also festzustellen, dass das Ventil sofort nach Abbruch des Füllstroms schließt, falls das Abdichtelement vor dem Füllvorgang in seine Füllstellung gebracht wurde. Anstatt das Abdichtelement vor dem Befüllen in seine Füllstellung zu bringen, ist es auch möglich die Befüllung mit dem Abdichtelement in Dichtstellung vorzunehmen. Damit das Ventil schließt, muss das Abdichtelement dann nach Abbrechen des Füllstroms in Füllstellung gebracht werden. Diese Vorgehensweise ist anzuwenden, falls die Strömungskräfte beim Befüllen nicht ausreichen um den Schließkolben in offener Stellung zu halten. Bei beiden Vorgehensweisen wird das Abdichtelement nach dem Befüllen wieder in seine Dichtstellung gebracht, um das Ventil für die nächste Auslösung vorzubereiten.

Das Abdichtelement kann nach wie vor eine Dichtscheibe sein, gegen welche die Mündung des Druckausgleichkanals gepresst wird. Bei dieser Ausführung besteht jedoch das Problem, dass diese Dichtscheibe ebenfalls die Funktion eines Puffers für den beschleunigten Schließkolben erfüllen muss. Hierbei wird die Dichtscheibe durch die relativ kleine Dichtfläche welche die Mündung des Druckausgleichkanals umgibt meistens derart verformt, dass sie bereits nach einmaligem Auslösen des Ventils ausgetauscht werden muss. Die vorliegende Erfindung hat auch dieses Problem gelöst. Es wird nämlich vorgeschlagen das Abdichtelement durch einen Stift in der Auslösekammer auszubilden, der in den Druckausgleichkanal einführbar ist, wobei die Abdichtung radial über einen O-Ring erfolgt. Bei dieser Ausführung mit radialer Abdichtung braucht das Abdichtelement keine Pufferfunktion mehr zu erfüllen, so dass es nicht nach jeder Auslösung ausgetauscht werden muss. Ein separates ringförmiges Pufferelement, das im wesentlichen den gleichen Außendurchmesser als die Auslösekammer und somit eine relativ große Pufferfläche aufweist, kann dann den Aufprall des Schließkolbens auf den Endanschlag weit wirkungsvoller dämpfen.

Die Auslösevorrichtung umfasst vorteilhaft ein in das Behälterventil integriertes Steuerventil das vorteilhaft wie folgt ausgestaltet ist. Ein Entlüftungskanal mündet in die Auslösekammer ein, wobei ein Steuerventilsitz der Auslösekammer zugekehrt ist. Ein Schließkörper ist hierbei dem Steuerventilsitz derart zugeordnet, dass der Druck in der Auslösekammer den Schließkörper axial gegen den Steuerventilsitz des Entlüftungskanals drückt, wobei der Schließkörper den Entlüftungskanal abdichtet. Ein von außen zugänglicher Betätigungsstößel ermöglicht es den Schließkörper von seinem Steuerventilsitz wegzudrücken um die Auslösekammer zu entlüften.

Eine besonders kompakte und einfache Ventilausführung wird dadurch erreicht, dass das Steuerventil in axialer Verlängerung des Druckausgleichkanals angeordnet ist, und das Abdichtelement durch einen Stift am Schließkörper des Steuerventils ausgebildet wird. Dieser Stift ist, wie bereits weiter oben beschrieben, axial in den Druckausgleichkanal des Schließkolbens einführbar, wobei die Abdichtung zwischen Stift und Druckausgleichkanal radial über einen O-Ring erfolgt.

In einer vorteilhaften, besonders einfachen Ausgestaltung weist dieses Steuerventil dann weiterhin einen Steuerventilköper auf, in dem der Entlüftungskanal und der Steuerventilsitz angeordnet sind, wobei dieser Steuerventilköper von außen zwischen einer ersten und zweiten Stellung verschraubbar ist. In der ersten Stellung dichtet der Stift den Druckausgleichkanal über den O-Ring ab, wenn denn der Schließkörper am Steuerventilsitz anliegt und der Schließkolben sich in seiner Endstellung befindet. In der zweiten Stellung gibt der Stift den Druckausgleichkanal zur Auslösekammer frei, wenn denn der Schließkörper am Steuerventilsitz anliegt und der Schließkolben sich in seiner Endstellung befindet.

Die Auslösevorrichtung umfasst weiterhin eine Betätigungsvorrichtung für das Steuerventil, die in einer vorteilhaften Ausgestaltung einfach auf den Ventilkörper aufsteckbar ist. Der Steuerventilköper ist hierbei vorteilhaft derart ausgebildet, dass er in zweiter Stellung weiter aus dem Ventilkörper hervorragt als in erster Stellung. Hierdurch wird ein Aufstecken der Betätigungsvorrichtung auf den Ventilkörper verhindert, solange der Ventilkörper nicht in seine erste Stellung zurückgeschraubt ist um das Ventil für die nächste Auslösung vorzubereiten.

### Beschreibung anhand der Figuren

Im folgenden wird nun eine Ausgestaltung der Erfindung anhand der beiliegenden Figuren beschrieben. Es zeigen:
- Fig.1:: einen Längsschnitt durch ein erfindungsgemäßes Ventil mit Steuerventil, wobei das Ventil geschlossen und das Steuerventil unbetätigt ist;
- Fig.2:: einen Längsschnitt wie in Fig. 1, unmittelbar nach dem Auslösen, wobei das Ventil offen und das Steuerventil betätigt ist;
- Fig.3:: einen Längsschnitt wie in Fig. 1, während der Löschmittelentleerung, wobei das Ventil offen und das Steuerventil inzwischen wieder betätigt ist;
- Fig.4:: einen Längsschnitt wie in Fig. 1, während dem Befüllen, wobei das Ventil offen und das Steuerventil in Füllstellung steht;
- Fig.5:: einen Längsschnitt wie in Fig. 1, nach dem Befüllen, wobei das Ventil wieder geschlossen ist und das Steuerventil noch in Füllstellung steht;
- Fig.6:: einen Längsschnitt durch eine Betätigungsvorrichtung für das Steuerventil.

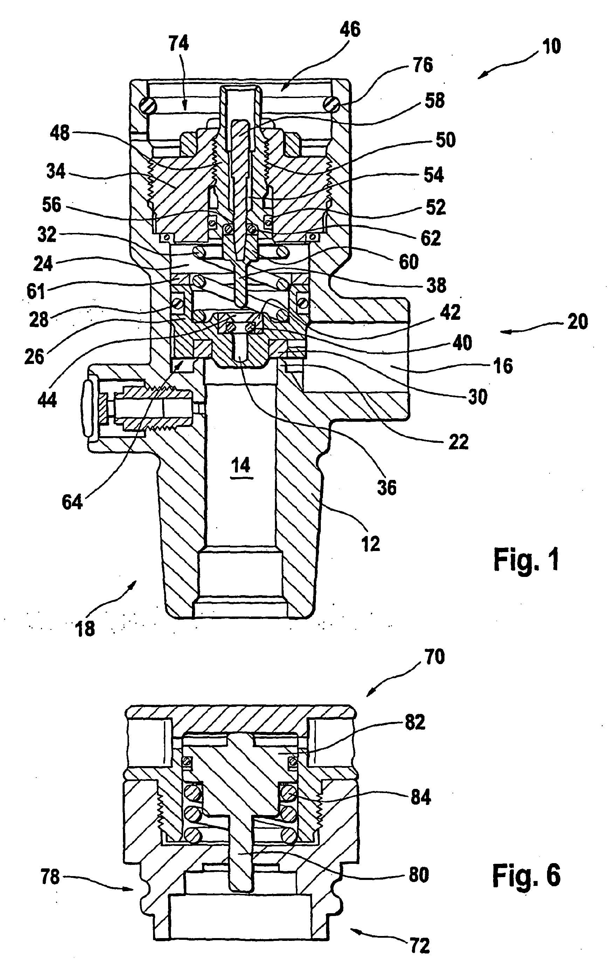

Das in den Figuren 1 bis 5 gezeigte Ventil 10 ist ein Behälterventil zum Auslösen von stationären Feuerlöschanlagen. Es ist insbesondere für den Hochdruckbereich (d.h. von zirka 60 bis 300 bar) u.a. mit Inertgas oder Kohlendioxid als Löschmittel geeignet.

Das Ventil 10 ist in Differenzdruckbauweise ausgeführt. Es *umfasst* einen Ventilkörper 12 mit einem Einlasskanal 14 und einem Auslasskanal 16. Der Einlasskanal 14 ist in einem Einschraubstutzen 18 ausgebildet der in einen (nicht gezeigten) Löschmittelbehälter eingeschraubt wird. Der Auslasskanal 16 ist in einem seitlichen Anschlussstutzen 20 des Ventilkörpers 12 untergebracht. Zwischen Einlasskanal 14 und Auslasskanal 16 ist ein Ventilsitz 22 angeordnet. Eine Auslösekammer 24 liegt dem Ventilsitz 22 im Ventilkörper 12 axial gegenüber.

Mit dem Bezugszeichen 26 ist ein Schließkolben bezeichnet, der mit seinem hinteren Ende abgedichtet in die Auslösekammer 24 eingeführt ist. Die Abdichtung erfolgt hierbei durch einen O-Ring 28 der in eine umlaufende Nut des Schließkolbens 26 eingesetzt ist. An seinem vorderen Ende weist der Schließkolben 26 einen stirnseitigen Dichtring 30 auf, mit dem er an den Ventilsitz 22 anpressbar ist. Dem Schließkolben 26 ist in der Auslösekammer 24 eine Schließfeder 32 zugeordnet, die auf denselben eine Federkraft in Richtung Ventilsitz 22 ausübt, wobei sie sich auf einem Einschraubstopfen 34 abstützt, der abgedichtet in den Ventilkörper 12 eingeschraubt ist und die Auslösekammer 24 axial begrenzt. Der Schließkolben 26 wird axial von einem Druckausgleichkanal 36 durchquert, über den die Auslösekammer 24 mit dem Einlasskanal 14 druckmäßig in Verbindung steht.

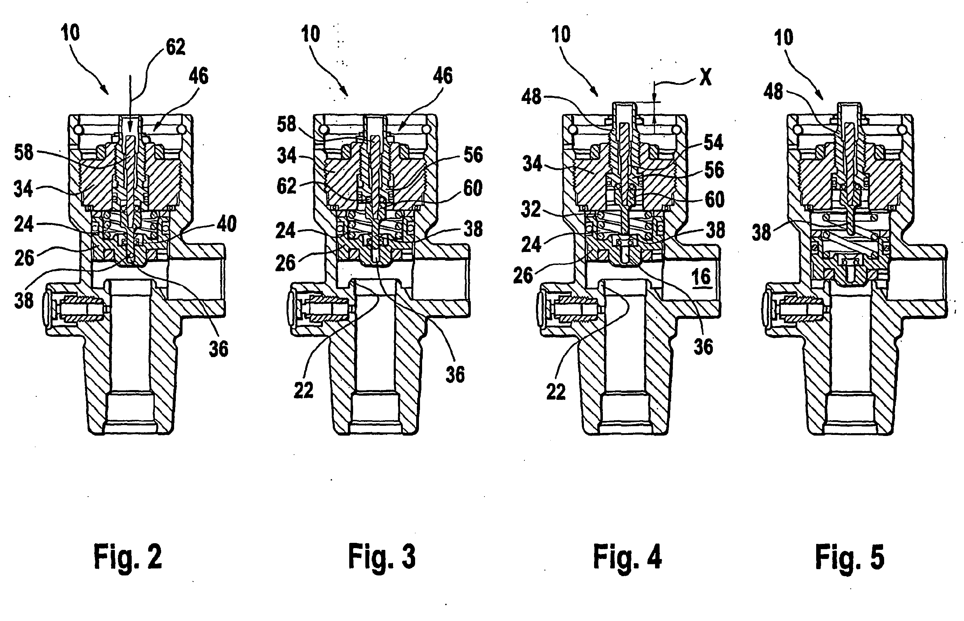

In axialer Verlängerung des Druckausgleichkanals 36 ist in der Auslösekammer 24 ein Stift 38 angeordnet. Letzterer ist axial in den Druckausgleichkanal 36 einführbar (siehe Fig. 2 und 3), wobei ein O-Ring 40 eine radiale Abdichtung des Stifts 38 im Kanal 36 gewährleistet. (Der Stift 38 bildet folglich ein Abdichtelement des Druckausgleichkanals 36 aus und wird nachfolgend als "Abdichtstift 38" bezeichnet.) Man beachte, dass der O-Ring 40 mittels eines Ringstücks 42 im Schließkolben 26 befestigt ist, wobei dieses Ringstück 42 stirnseitig eine konische Mulde 44 zum selbstzentrierenden Einführen der abgerundeten Spitze des Abdichtstifts 38 in den Druckausgleichkanal 36 ausbildet.

Mit dem Bezugszeichen 46 ist ein Steuerventil bezeichnet, das in axialer Verlängerung des Druckausgleichkanals 36 in den Einschraubstopfen 34 eingebaut ist. Dieses Steuerventil 46 weist eine Steuerventilhülse 48 auf, die in eine axiale Gewindebohrung 50 des Einschraubstopfen 34 eingeschraubt ist und unterhalb dieser Gewindebohrung 50 mittels eines O-Rings 52 in einer zylindrischen Kammer des Einschraubstopfen 34 radial abgedichtet ist: Die Steuerventilhülse 48 wird axial von einem Entlüftungskanal 54 durchquert und weist zur Auslösekammer 24 hin einen Steuerventilsitz 56 auf, über den der Entlüftungskanal 54 in die Auslösekammer 24 einmündet. Im Entlüftungskanal 54 ist ein Betätigungsstößel 58 mit radialem Spiel gelagert. Dieser Betätigungsstößel 58 trägt in der Auslösekammer 24 einen Schließkörper 60 der dem Steuerventilsitz 56 derart zugeordnet ist, dass der Druck in der Auslösekammer 24 den Schließkörper 60 axial gegen den Steuerventilsitz 56 drückt. Hierbei dichtet ein O-Ring 62 am Schließkörper 60 den Entlüftungskanal 54 zur Auslösekammer 24 ab. Der Betätigungsstößel 58 ermöglicht es den Schließkörper 60 von außen in die Auslösekammer 24, d.h. weg vom Steuerventilsitz 56 zu drücken, wodurch die Auslösekammer 24 über den Entlüftungskanal 54 entlüftet wird. Man beachte, dass der Abdichtstift 38 ein Ansatz des Schließkörpers 60 ist. Da der Betätigungsstößel 58 mit radialem Spiel in dem Entlüftungskanal 54 gelagert ist, verfügt der Abdichtstift 38 über genügend Bewegungsspielraum um sich problemlos in dem Druckausgleichkanal 36 zentrieren zu können.

Anhand der Figuren 1 bis 5 wird jetzt die Funktionsweise des Ventils 10 beschrieben.

In Figur 1 befindet sich das Ventil in unausgelöster Ruhestellung. Der Behälterdruck der im Einlasskanal 14 vorherrscht hat sich ebenfalls in der Auslösekammer 24 eingestellt. Da der durch den O-Ring 28 in der Auslösekammer 24 abgedichtete Querschnitt wesentlich größer als der abgedichtete Querschnitt am Ventilsitz 22 ist, und im Auslassstutzen 16 zudem Atmosphärendruck vorherrscht, wirkt auf den Schließkolben 26 eine positive Druckkraft in Richtung Ventilsitz 22. Letztere ist desto größer je größer der Behälterdruck ist, so dass stets gewährleistet ist, dass das Ventil 10 einen hohen Gasdruck im Behälter bis zum Auslösen der Anlage sicher absperrt. Man beachte, dass der Behälterdruck ebenfalls das Steuerventil 46 in Schließstellung hält.

Soll das Ventil 10 ausgelöst werden, so muss der Ventilstößel 58 nach innen gedrückt werden, so dass er den Schließkörper 60 vom Steuerventilsitz 56 wegdrückt, wodurch die Auslösekammer 24 über den Entlüftungskanal 54 entlüftet wird. Man beachte, dass die zum Auslösen erforderliche Kraft relativ klein ist, da der Durchmesser des Steuerventilsitzes 56 sehr klein ist. Sobald die Auslösekammer 24 über das Steuerventil 46 entlüftet wird, fällt der Druck in der Auslösekammer 24. Die auf den Schließkolben 26 wirkende positiv Druckkraft wird folglich kleiner und schlussendlich sogar negativ, d.h. dass sie nun in Richtung Einschraubstopfen 34 wirkt. Wird diese negative Druckkraft größer als die in Richtung Ventilsitz 22 wirkende Federkraft, so hebt der Schließkolben 26 vom Ventilsitz 22 ab und wird in Richtung Einschraubstopfen 34 beschleunigt. Hierbei dringt der Abdichtstift 38 in den Druckausgleichskanal 36 ein und dichtet letzteren ab. Es kann nun kein Druckgas mehr über den Druckausgleichskanal 36 in die Auslösekammer 24 nachströmen und der Schließkolben 26 wird in Richtung Einschraubstopfen 34 beschleunigt. Mit dem Bezugszeichen 61 ist in Fig. 1 ein ringförmiges Pufferelement aus einem elastischen Material bezeichnet, das stirnseitig am Schließkolben 26 befestigt ist und im wesentlichen den gleichen Außendurchmesser als die Auslösekammer 24 aufweist. Dieses relativ großflächige Pufferelement federt den Aufprall des beschleunigten Schließkolbens 26 auf den Einschraubstopfen 34 wirksam ab, ohne dass hierbei eine Dichtfläche beschädigt wird.

In Fig. 2 ist das Ventil in einer Stellung gezeigt in welcher der Schließkolben 26 in Endstellung am Einschraubstopfen 34 anliegt, wobei das Steuerventil 46 noch betätigt, d.h. geöffnet ist. Mit dem Pfeil 62 ist eine Betätigungskraft dargestellt, die den Betätigungsstößel 58 nach unten drückt. Man beachte auch den Abdichtstift 38 der in den Druckausgleichskanal 36 hineinragt und letzteren im O-Ring 40 abdichtet, so dass kein Druckgas in die Auslösekammer 24 nachströmen kann.

In Fig. 3 ist das Ventil in einer Stellung gezeigt in welcher der Schließkolben 26 in Endstellung am Einschraubstopfen 34 anliegt, wobei das Steuerventil 46 jedoch jetzt unbetätigt, d.h. geschlossen ist. Es wirkt jetzt keine Betätigungskraft mehr auf den Betätigungsstößel 58, so dass der Druck in dem Druckausgleichkanal 36 den Abdichtstift 38 nach oben drückt, wodurch der Schließkörper 60 mit seinem O-Ring 62 wieder an den Steuerventilsitz 56 angedrückt wird, und das Steuerventil 46 schließt. Man beachte, dass das Ventil 10 jedoch nach wie vor sicher geöffnet bleibt, da sich über den durch den Abdichtstift 38 verschlossenen Druckausgleichkanal 36 kein wesentlicher Gegendruck in der Auslösekammer 24 aufbauen kann.

Beim Entleeren des Behälters wird die auf den Schließkolben 26 in Richtung Einschraubstopfen 34 wirkende Druckkraft zusehends kleiner. Falls diese Druckkraft schlussendlich kleiner als die Federkraft der Schließfeder 32 wird, bewegt die Schließfeder 32 den Schließkolben 26 in Richtung Ventilsitz 22. Hierdurch entsteht ein leichter Unterdruck in der Auslösekammer 24 der das Steuerventil 46 wiederum öffnet, so dass Außenluft in die Auslösekammer 24 nachströmen kann und der Schließkolben 26 seine Schließbewegung bis auf den Ventilsitz 22 fortsetzen kann.

In Fig. 3 ist das Ventil 10 beim Befüllen des Behälters gezeigt. Man beachtet, dass die Steuerventilhülse 48 um eine gewisse Länge X aus dem Einschraubstopfen 34 herausgeschraubt ist. In dieser Stellung befindet sich der Abdichtstift 38 des am Steuerventilsitz 56 anliegenden Schließkörpers 60 in Füllstellung, d.h. er kann den Druckausgleichkanal 36 nicht mehr abdichten. Das Befüllen des Behälters erfolgt nun über den Auslasskanal 16. Beim Beginn des Füllvorgangs wirkt der Fülldruck hierbei auf die den Ventilsitz 22 umgebende Ringfläche 64 des Schließkolbens 26 (siehe Fig. 1). Die hieraus resultierende Druckkraft ist größer als die in Richtung Ventilsitz 22 wirkende Federkraft, so dass der Schließkolben 26 vom Ventilsitz 22 abhebt und in Richtung Einschraubstopfen 34 beschleunigt wird. Gleichzeitig wird der frei in die Auslösekammer 24 hineinhängende Schließkörper 60 in Richtung Steuerventilsitz 56 beschleunigt und durch den Druck, der sich über den Druckausgleichkanal 36 in der Auslösekammer 24 aufbaut, gegen den Steuerventilsitz 56 gedrückt, so dass der Entlüftungskanal 54 abgedichtet ist. Solange der Füllstrom mit hoher Geschwindigkeit durch den Auslasskanal 16 einströmt, wirken bedeutende Strömungskräfte auf den Schließkolben 26 und halten ihn gegen die Federkraft der Schließfeder 32 vom Ventilsitz 22 weg. Wird der Füllstrom jedoch abgebrochen, so verschwinden die dynamischen Druckkräfte die auf den Schließkolben 26 wirken. Die Resultante der statischen Druckkräfte die auf den Schließkolben 26 wirken ist ebenfalls gleich Null, da sich der Abdichtstift 38 in Füllstellung befindet und der Behälterdruck sich folglich über den offenen Druckausgleichkanal 36 in der Auslösekammer 24 aufbauen kann. Der Schließkolben 26 befindet sich somit in einem Druckgleichgewicht und wird nun durch die Federkraft der Schließfeder 32 auf den Ventilsitz 22 gedrückt. Zusammenfassend bleibt also festzustellen, dass das Ventil 10 sofort nach Abbruch des Füllstroms schließt, falls der Abdichtstift 38 vor dem Füllvorgang durch teilweises Herausschrauben der Steuerventilhülse 48 in seine Füllstellung gebracht wurde.

Anstatt den Abdichtstift 38 vor dem Füllvorgang durch teilweises Herausschrauben der Steuerventilhülse 48 in seine Füllstellung zu bringen, ist es auch möglich die Befüllung mit dem Abdichtstift 38 in Dichtstellung vorzunehmen. Bei dieser Vorgehensweise wird das Ventil 10 erst durch teilweises Herausschrauben der Steuerventilhülse 48 nach Abbruch des Füllstroms geschlossen. Diese Vorgehensweise ist insbesondere dann anzuwenden, falls beim Abdichtstift 38 in Füllstellung, die Strömungskräfte beim Befüllen nicht ausreichen um den Schließkolben 26 in geöffneter Stellung zu halten.

Die Stellung des Ventils nach Abbruch des Füllstroms ist in Fig. 5 gezeigt. Um in die auslösebereite Ruhestellung der Fig. 1 zu gelangen muss lediglich die Steuerventilhülse 48 in ihre Ausgangstellung zurückgeschraubt werden, in der sich der Abdichtstift 38 in seiner sogenannten Dichtstellung befindet.

Beim gezeigten Ventil 10 erfolgt das Betätigen des Abdichtstifts 38 zwischen Dichtstellung und Füllstellung folglich durch Verschrauben der Steuerventilhülse 48 zwischen einer ersten und zweiten Position. Das aus dem Einschraubstopfen 34 herausragende Ende der Steuerventilhülse 48 ist hierbei vorteilhaft zum Aufsetzen eines Handrads (nicht gezeigt) ausgebildet, so dass das Betätigen des Abdichtstifts 38 zwischen Dichtstellung und Füllstellung wie das Schließen und Öffnen eines normalen Ventils erfolgen kann. Wie in Fig. 4 und 5 gezeigt, ragt die Steuerventilhülse 48 in ihrer zweiten Position, d.h. in Füllstellung des Abdichtstifts 38, weiter aus dem Einschraubstopfen 34 hervor, als in ihrer ersten Position, d.h. in Dichtstellung des Abdichtstifts 38 (siehe Fig. 1, 2 und 3). Hierdurch wird verhindert, dass eine Betätigungsvorrichtung auf den Ventilkörper aufgesetzt werden kann falls der Abdichtstift 38 nicht in Dichtstellung ist.

Eine solche Betätigungsvorrichtung 70 ist in Fig. 6 gezeigt. Sie umfasst einen Sockel 72 der axial in eine komplementär gestaltete Fassung 74 am Kopfende des Ventilkörpers 12 einsteckbar ist und hierin mittels eines Federring 76 gesichert wird, der in eine Ringnut 78 am Sockel 72 einrastet. Es ist ersichtlich, dass sich der Sockel 72 nicht in der Fassung 74 sichern lässt, solange die Steuerventilhülse 48 nicht bis in ihre erste Position in den Einschraubstopfen 34 eingeschraubt ist.

Mit dem Bezugszeichen 80 ist in Fig. 6 ein Stößel bezeichnet. Ist die Betätigungsvorrichtung 70 mit ihrem Sockel 72 in der Fassung 74 am Kopfende des Ventilkörpers 12 gesichert, so ermöglicht es der Stößel 80 den Betätigungsstößel 58 in der Steuerventilhülse 48 nach unten zu drücken um das Steuerventil zu öffnen.

In der Betätigungsvorrichtung 70 der Fig. 6 ist der Stößel 80 mit einem Druckkolben 82 verbunden, der mit einem Druckmedium beaufschlagbar ist. Eine Rückstellfeder 84 legt hierbei eine zurückgezogene Ruhestellung des Stößels 80 fest.

Ein Vorteil des beschriebenen Ventils ist jedoch, dass es problemlos mit unterschiedlichen Betätigungsvorrichtungen ausgerüstet werden kann, die mit ihrem genormten Sockel einfach in die Fassung 74 am Kopfende des Ventilkörpers 12 eingesteckt werden. Man beachte insbesondere, dass das Auswechseln der Betätigungsvorrichtung selbst beim druckbeaufschlagten Ventil 10 ohne Problem erfolgen kann. Da für das Öffnen des Steuerventils 46 relativ kleine Auslösekräfte benötigt werden, ist es ohne weiteres möglich auch relativ schwache Betätigungsvorrichtungen, wie z.B. elektromagnetische oder thermische Betätigungsvorrichtungen, mit dem Ventil 10 einzusetzen.

## Patentansprüche

1. Behälterventil mit Auslösevorrichtung für stationäre Feuerlöschanlagen, umfassend:
einen Ventilkörper (12) mit einem Einlasskanal (14) und einem Auslasskanal (16), einem Ventilsitz (22) der zwischen Einlasskanal (14) und Auslasskanal (16) angeordnet ist, sowie einer Auslösekammer (24) die dem Ventilsitz (22) axial gegenüberliegt;
ein Schließkolben (26) der im Ventilkörper (12) axial zum Ventilsitz (22) verschiebbar ist, wobei dieser Schließkolben (26) mit einem Ende abgedichtet in die Auslösekammer (24) eingeführt ist, wo er eine Druckfläche ausbildet, und am gegenüberliegenden Ende eine Dichtfläche aufweist mit der er an den Ventilsitz (22) anpressbar ist, und wobei der Schließkolben (26) einen Druckausgleichkanal (36) aufweist, über den die Auslösekammer (24), bei auf dem Ventilsitz (22) aufliegendem Schließkolben (26), mit dem Einlasskanal (14) druckmäßig in Verbindung steht;
eine Schließfeder (32) die dem Schließkolben (26) derart zugeordnet ist, dass sie auf denselben eine Federkraft in Richtung Ventilsitz (22) ausübt;
eine Auslösevorrichtung (46, 70) die mit der Auslösekammer (24) in Verbindung steht; wobei über die Auslösevorrichtung (46, 70) ein Druckabfall in der Auslösekammer (24) erzeugbar ist, so dass der Schließkolben (26) von seinem Ventilsitz (22) abhebt und durch den Differenzdruck vom Ventilsitz (22) weg gegen einen Endanschlag in eine Endstellung bewegt wird;
ein Abdichtelement (38) zum Abdichten des Druckausgleichkanals wenn der Schließkolben (26) sich in seiner Endstellung befindet;
**wobei**
das Abdichtelement (38) von außen zwischen einer Dichtstellung und einer Füllstellung betätigbar ist, wobei es in der Dichtstellung den Druckausgleichkanal (36) des Schließkolbens (26) in Endstellung abdichtet und in der Füllstellung den Druckausgleichkanal (36) des Schließkolbens (26) in Endstellung freigibt.

2. Behälterventil nach Anspruch 1, **dadurch gekennzeichnet, dass** das Abdichtelement (38) von außen zwischen seiner Dichtstellung und seiner Füllstellung verschraubbar ist.

3. Behälterventil nach Anspruch 1 oder 2, **dadurch gekennzeichnet, dass** das Abdichtelement (38) durch einen Stift in der Auslösekammer (24) ausgebildet wird, der in den Druckausgleichkanal (36) einführbar ist, wobei die Abdichtung radial über einen O-Ring erfolgt.

4. Behälterventil nach Anspruch 3, **gekennzeichnet durch** ein ringförmiges Pufferelement (61) das im wesentlichen den gleichen Außendurchmesser als die Auslösekammer (24) aufweist.

5. Behälterventil nach einem der Ansprüche 1 bis 4, **dadurch gekennzeichnet, dass** die Auslösevorrichtung (46, 70) ein Steuerventil (46) umfasst.

6. Behälterventil nach Anspruch 5, **dadurch gekennzeichnet, dass** das Steuerventil (46) umfasst:
einen Entlüftungskanal (54) der in die Auslösekammer (24) einmündet; einen Steuenrentilsitz (56) welcher der Auslösekammer (24) zugekehrt ist; einen Schließkörper (60) der dem Steuerventilsitz (56) derart zugeordnet ist, dass der Druck in der Auslösekammer (24) den Schließkörper (60) axial gegen den Steuerventilsitz (56) des Entlüftungskanals (54) drückt, wobei der Schließkörper (60) den Entlüftungskanal (54) abdichtet; und
einen Betätigungsstößel (58) zum Wegdrücken des Schließkörpers (60) von seinem Steuerventilsitz (56).

7. Behälterventil nach Anspruch 6, **dadurch gekennzeichnet, dass**
das Steuerventil (46) in axialer Verlängerung des Druckausgleichkanals (36) im Schließkolben (26) angeordnet ist, und
das Abdichtelement (38) durch einen Stift (38) am Schließkörper (60) des Steuerventils (46) ausgebildet wird, wobei dieser Stift (38) axial in den Druckausgleichkanal (36) des Schließkolbens (26) einführbar ist und die Abdichtung zwischen Stift (38) und Druckausgleichkanal (36) radial über einen O-Ring (40) erfolgt.

8. Behälterventil nach Anspruch 7, **dadurch gekennzeichnet, dass** das Steuerventil (46) eine Steuerventiihülse (48) aufweist in welcher der Entlüftungskanal (54) und der Steuerventilsitz (56) angeordnet sind, wobei diese Steuerventilhülse (48) von außen zwischen einer ersten und zweiten Stellung verschraubbar ist, wobei:
in erster Stellung, der Stift (38) den Druckausgleichkanal (36) über den O-Ring (40) abdichtet, wenn denn der Schließkörper (60) am Steuerventilsitz (56) anliegt und der Schließkolben (26) sich in seiner Endstellung befindet; und
in zweiter Stellung, der Stift den Druckausgieichkanal (36) zur Auslösekammer (24) freigibt, wenn denn der Schließkörper (60) am Steuerventilsitz (56) anliegt und der Schließkolben (26) sich in seiner Endstellung befindet.

9. Behälterventil Anspruch 8, **dadurch gekennzeichnet:**
**dass** die Auslösevorrichtung (46, 70) weiterhin eine Betätigungsvorrichtung (70) für das Steuerventil (46) umfasst die auf den Ventikörper (12) aufsetzbar ist; und
**dass** die Steuerventilhülse (48) in zweiter Stellung weiter aus dem Ventilkörper (12) hervorragt als in erster Stellung, wodurch ein Aufsetzen der Betätigungsvorrichtung (70) auf den Ventilkörper (12) verhindert wird.

10. Behälterventil nach Anspruch 9, **dadurch gekennzeichnet, dass** die Betätigungsvorrichtung (70) einen Sockel (72) aufweist der axial in eine komplementär gestaltete Fassung (74) am Kopfende des Ventilkörpers (12) einsteckbar ist und hier hierin mittels eines Federrings (76) gesichert wird.

## Claims

1. Container valve with tripping device for stationary fire extinguishing plants, comprising:
a valve body (12) with an inlet channel (14) and an outlet channel (16), a valve seat (22) arranged between the inlet channel (14) and the outlet channel (16) as well as a tripping chamber (24) axially opposed to the valve seat (22);
a closing piston (26) which is slidably movable within the valve body (12) axially relative to the valve seat (22), this closing piston (26) being inserted with one end in the tripping chamber (24) so as to seal the chamber where it forms a pressure face, and which comprises a sealing face at the opposite end with which it can be pressed against the valve seat (22), and wherein the closing piston (26) comprises a pressure compensation channel (36) via which the tripping chamber (24) is in pressure communication with the inlet channel (14) with the closing piston (26) lying on the valve seat (22);
a closing spring (32) which is assigned to the closing piston (26) such that it exerts a spring force on the same in the direction of the valve seat (22);
a tripping device (46, 70) in communication with the tripping chamber (24); wherein via the tripping device (46, 70) a pressure drop can be generated in the tripping chamber (24), so that the closing piston (26) is lifted from its valve seat (22) and by the differential pressure is moved away from the valve seat (22) into an end position against a limit stop;
a sealing element (38) for sealing the pressure compensation channel if the closing piston (26) is in its end position;
wherein
the sealing element (38) can be actuated from the outside between a sealing position and a filling position, wherein in the sealing position it seals the pressure compensation channel (36) of the closing piston (26) in the end position and in the filling position it opens the pressure compensation channel (36) of the closing piston (26) in the end position

2. Container valve according to claim 1, **characterized in that** the sealing element (38) can be screwed from the outside between its sealing position and its filling position

3. Container valve according to claim 1 or 2, **characterized in that** the sealing element (38) is formed by a pin in the tripping chamber (24) which can be inserted into the pressure compensation channel (36), the sealing being effected radially via an O-ring.

4. Container valve according to claim 3, **characterized by** an annular buffer element (61) which has essentially the same outer diameter as the tripping chamber (24)

5. Container valve according to one of claims 1 to 4, **characterized in that** the tripping device (46, 70) comprises a control valve (46)

6. Container valve according to claim 5, **characterized in that** the control valve (46) comprises:
a vent channel (54) ending in the tripping chamber (24);
a control valve seat (56) facing the tripping chamber (24);
a closing body (60) assigned to the control valve seat (56) such that the pressure in the tripping chamber (24) presses the closing body (60) axially against the control valve seat (56) of the vent channel (54), wherein the closing body (60) seals the vent channel (54); and
an operating tappet (58) for pressing the closing body (60) away from its control valve seat (56)

7. Container valve according to claim 6, **characterized in that**
the control valve (46) is arranged in the axial extension of the pressure compensation channel (36) in the closing piston (26), and
the sealing element (38) is formed by a pin (38) at the closing body (60) of the control valve (46), wherein this pin (38) can be axially introduced into the pressure compensation channel (36) of the closing piston (26) and the sealing between the pin (38) and the pressure compensation channel (36) is effected radially via an O-ring (40),

8. Container valve according to claim 7, **characterized in that** the control valve (46) comprises a control valve sleeve (48) in which the vent channel (54) and the control valve seat (56) are arranged, this control valve sleeve (48) being screwable from the outside between a first and a second position, wherein:
in the first position, the pin (38) seals the pressure compensation channel (36) via the O-ring (40) if the closing body (60) abuts the control valve seat (56) and the closing piston (26) is in its end position; and
in the second position, the pin opens the pressure compensation channel (36) to the tripping chamber (24) if the closing body (60) abuts the control valve seat (56) and the closing piston (26) is in its end position.

9. Container valve according to claim 8, **characterized in that**
the tripping device (46, 70) furthermore comprises an operating device (70) for the control valve (46) to be placed upon the valve body (12); and
the control valve sleeve (48) in the second position projects further from the valve body (12) than in the first position, thus preventing a placing of the operating device (70) onto the valve body (12)

10. Container valve according to claim 9, **characterized in that** the operating device (70) comprises a base (72) which can be axially inserted into a complementarily designed holder (74) at the face of the valve body (12) and is secured therein by means of a lock washer (76)

## Revendications

1. Robinet de récipient avec dispositif de déclenchement pour installations fixes d'extinction d'incendies, comportant :
- un corps de robinet (12) avec un canal d'admission (14) et un canal de sortie (16), un siège (22) situé entre le canal d'admission (14) et le canal de sortie (16), et une chambre de déclenchement (24) située axialement vis-à-vis du siège (22) ;
- un piston de fermeture (26) déplaçable dans le corps de robinet (12) axialement par rapport au siège (22), ce piston de fermeture (26) étant introduit avec étanchéité par une extrémité dans la chambre de déclenchement (24) où il forme une surface de pression et son extrémité opposée présentant une surface d'étanchéité en laquelle il peut être pressé sur le siège (22), et le piston de fermeture (26) présentant un canal de compensation de pression (36) par l'intermédiaire duquel la chambre de déclenchement (24), lorsque le piston de fermeture (26) est appliqué sur le siège (22), est relié par pression au canal d'admission (14) ;
- un ressort de fermeture (32) qui est associé au piston de fermeture (26) de manière telle qu'il exerce sur celui-ci une force élastique en direction du siège (22) ;
- un dispositif de déclenchement (46, 70) qui est relié à la chambre de déclenchement (24), une perte de pression pouvant être générée dans la chambre de déclenchement (24) par l'intermédiaire du dispositif de déclenchement (46, 70) en sorte que le piston de fermeture (26) se lève de son siège (22) et, du fait de la pression différentielle, se déplace du siège (22) vers une butée finale pour prendre une position finale ;
- un élément d'étanchéité (38) pour rendre étanche le canal de compensation de pression lorsque le piston de fermeture (26) se trouve dans sa position finale,
- l'élément d'étanchéité (38) pouvant être actionné depuis l'extérieur entre une position d'étanchéité et une position de remplissage, ledit élément, en position d'étanchéité, rendant étanche le canal de compensation de pression (36) du piston de fermeture (26) en position finale et, en position de remplissage, libérant le canal de compensation de pression (36) du piston de fermeture (26) en position finale

2. Robinet de récipient selon la revendication 1, **caractérisé en ce que** l'élément d'étanchéité (38) peut être vissé depuis l'extérieur entre sa position d'étanchéité et sa position de remplissage

3. Robinet de récipient selon la revendication 1 ou 2, **caractérisé en ce que** l'élément d'étanchéité (38) se présente sous la forme d'une tige dans la chambre de déclenchement (24), laquelle tige peut être introduite dans le canal de compensation de pression (36), l'étanchéité étant réalisée radialement par l'intermédiaire d'un joint torique

4. Robinet de récipient selon la revendication 3, **caractérisé par** un élément tampon annulaire (61) qui présente sensiblement le même diamètre extérieur que la chambre de déclenchement (24)

5. Robinet de récipient selon l'une des revendications 1 à 4, **caractérisé en ce que** le dispositif de déclenchement (46, 70) comporte une vanne pilote (46)

6. Robinet de récipient selon la revendication 5, **caractérisé en ce que** la vanne pilote (46) comporte :
- un canal de ventilation (54) qui débouche dans la chambre de déclenchement (24) ;
- un siège de vanne pilote (56) qui est tourné vers la chambre de déclenchement (24) ;
- un corps de fermeture (60) qui est associé au siège de vanne pilote (56) de telle manière que la pression, dans la chambre de déclenchement (24), presse le corps de fermeture (60) axialement contre le siège de vanne pilote (56) du canal de ventilation (54), le corps de fermeture (60) rendant étanche le canal de ventilation (54) et
- un poussoir d'actionnement (58) pour repousser le corps de fermeture (60) de son siège de vanne pilote (56)

7. Robinet de récipient selon la revendication 6, **caractérisé en ce que**
- la vanne pilote (46) est située dans le prolongement axial du canal de compensation de pression (36) dans le piston de fermeture (26) et
- l'élément d'étanchéité (38) est réalisé par une tige (38) sur le corps de fermeture (60) de la vanne pilote (46), ladite tige (38) pouvant être introduite axialement dans le canal de compensation de pression (36) du piston de fermeture (26) et l'étanchéité entre la tige (38) et le canal de compensation de pression (36) étant réalisée radialement par l'intermédiaire d'un joint torique (40).

8. Robinet de récipient selon la revendication 7, **caractérisé en ce que** la vanne pilote (46) présente un manchon de vanne pilote (48) dans lequel sont situés le canal de ventilation (54) et le siège de vanne pilote (56), ledit manchon de vanne pilote (48) pouvant être vissé depuis l'extérieur entre une première position et une deuxième position,
- la tige (38), dans la première position, rendant étanche le canal de compensation de pression (36) par l'intermédiaire du joint torique (40) lorsque le corps de fermeture (60) est appliqué contre le siège de vanne pilote (56) et le piston de fermeture (26) se trouve dans sa position finale et
- la tige, dans la deuxième position, libérant le canal de compensation de pression (36) vers la chambre de déclenchement (24) lorsque le corps de fermeture (60) est appliqué contre le siège de vanne pilote (56) et le piston de fermeture (26) se trouve dans sa position finale.

9. Robinet de récipient selon la revendication 8, **caractérisé en ce que**
- le dispositif de déclenchement (46, 70) comporte en outre un dispositif d'actionnement (70) pour la vanne pilote (46), lequel peut être posé sur le corps de robinet (12), et
- le manchon de vanne pilote (48), dans la deuxième position, fait plus saillie hors du corps de robinet (12) que dans la première position, ceci empêchant une pose du dispositif d'actionnement (70) sur le corps de robinet (12)

10. Robinet de récipient selon la revendication 9, **caractérisé en ce que** le dispositif d'actionnement (70) comporte un socle (72) qui peut être emboîté axialement dans une douille complémentaire (74) à l'extrémité supérieure du corps de robinet (12) et y est bloqué au moyen d'une bague élastique (76)
